# EUROPEAN PATENT SPECIFICATION

(11) **EP 3 798 641 B1**
(45) Date of publication and mention of the grant of the patent: **21.10.2026**
(21) Application number: 18919433.5
(22) Date of filing: 22.05.2018
(51) Int. Cl.: G01N 35/04

(54) **ANALYSIS DEVICE**
ANALYSEVORRICHTUNG
DISPOSITIF D'ANALYSE

(43) Date of publication of application: 31.03.2021
(73) Proprietor: Hitachi High-Tech Corporation, Minato-ku Tokyo 105-6409 (JP)
(72) Inventor: YABUHARA, Tadao, Tokyo 105-6409 (JP); MASUYA, Akira, Tokyo 105-6409 (JP); TAMURA, Terumi, Tokyo 105-6409 (JP)
(74) Representative: MERH-IP Matias Erny Reichl Hoffmann Patentanwälte PartG mbB
(86) International application number: PCT/JP2018/019693
(87) International publication number: WO 2019/224921

(56) References cited:
- WO-A1-2014/042011
- JP-A- 2010 083 679
- JP-A- H09 178 739
- JP-A- H09 211 005
- US-A1- 2012 003 065
- US-A1- 2012 080 610
- US-A1- 2014 093 423

## Description

### Technical Field

The present invention relates to an analysis device that inspects a sample.

### Background Art

In the related art, a sample placed on a micro-well plate is stored in an incubator or the like after being measured by an operator using a turbidimeter, absorbance, a microscope, or the like and before the sample is measured again. Since this measurement is performed a plurality of times, burden on the operator is large. Since it is necessary to measure a large amount of samples in a large hospital or an inspection contracting organization, it is required to improve efficiency of this work. Therefore, in the related art, a technique for automatically transporting and measuring the sample is proposed.

The following PTL 1 describes an automated storage and retrieval device for trays holding a subject matter. PTL 1 discloses a technique in which "A computer system (105) is programmed to control a storage gantry to move the trays between a storage rack and an automated machine. In a preferred embodiment, the subject matter in the trays is a plurality of micro-well plates (125A to 125F) in which microscopic crystals may be growing and the automated machine is configured to inspect and classify the microscopic crystals. The automated machine has an indexing device for sequentially placing the microscopic crystals in camera-view of a camera (135, 155) and a control computer is programmed to control the indexing device and to cause the camera to take images of the microscopic crystals and then transfer the images to a classifying processor where the images are classified. In a preferred embodiment, the microscopic crystals are protein crystals that have been grown in wells of the micro-well plates." (See the abstract).

The following PTL 2 describes a microscope inspection device. An object of PTL 2 is "to provide a microscope inspection device capable of efficiently inspecting many specimens sequentially" and PTL2 discloses a technique in which "A microscope inspection device 100 includes a cassette 102 capable of storing a plurality of specimens 101, an elevator 103 that moves the cassette 102 in an up-down direction, a microscope 132 that magnifies the specimen 101 for observation, an XY stage 105 for appropriately placing the specimen 101 at an observation position, and a transport device 104 that transports the specimen 101 between the cassette 102 and the XY stage 105. The transport device 104 includes a holding part that holds the specimen 101, a horizontal movement mechanism that horizontally moves the holding part, an elevating mechanism that moves the holding part up and down, and a rotation mechanism that rotates the holding part. The XY stage 105 includes an upper table 119 movable in an X direction, and the specimen 101 is placed on the upper table 119. The upper table 119 includes an opening 128 through which a fork unit 117 of the transport device 104 passes up and down." (See the abstract).
PLT 3 discloses a conveying device including: a storage unit storing two or more sheets of slide glasses to be subjected to a predetermined treatment; a stage holding only one sheet of slide glass to be subjected to the treatment; a supply arm by which one sheet of slide glass to be subjected to the treatment is picked up from the storage unit and supplied onto the stage; and a discharge arm by which the slide glass mounted on the stage is picked up and discharged in the storage unit.
PLT4 discloses a specimen transporter that can be used by being connected to a specimen imaging apparatus that does not have a function of collecting an imaged specimen plate.

### Citation List

### Patent Literature

PTL 1: JP-T-2007-511753
PTL 2: JP-A-2006-064850
PLT 3: US 2012/003065 A1
PTL 4: US 2014/093423 A1

### Summary of Invention

### Technical Problem

In PTL 1, the storage gantry sequentially transfers micro-well plate holding trays from storage slots to work cell regions at a predetermined time interval. After the samples in the micro-well plates are inspected, the storage gantry returns the micro-well plate holding trays to respective storage slots thereof. The above operations are repeated. Therefore, depending on a position of the storage slot, due to a transfer and return operation time, a next sample waits for completion of the inspection of a previous sample in the work cell region. Thus, a throughput of an inspection processing is reduced.

In PTL 2, the samples can be sequentially transferred into an inspection unit, but on the other hand, a region for installing a dedicated mechanism for delivering the samples is required. Therefore, a size of the device is increased, which also increases a cost of the device.

The invention has been made in view of the above problems, and an object of the invention is to enhance a throughput of an analysis device by efficiently delivering sample containers between an accommodation unit and a measurement unit.

### Solution to Problem

The above cited problem is solved by appended claims. In particular, the analysis device according to the invention includes a first holding part that holds a sample container to be delivered to a measurement unit and a second holding part that holds a sample container received from the measurement unit, and the first holding part and second holding part are moved in an integrated manner.

### Advantageous Effect

According to the analysis device of the invention, the first holding part and the second holding part are operated in cooperation with each other, so that the sample container can be efficiently delivered between the accommodation unit and the measurement unit. Thus, a throughput of the analysis device can be enhanced.

### Brief Description of Drawings

[FIG. 1A] FIG. 1A is a plan view showing an overall configuration of an analysis device 001 according to an embodiment.
[FIG. 1B] FIG. 1B is a front view of the analysis device 001.
[FIG. 2A] FIG. 2A is a diagram illustrating an operation procedure when a first holding part 031 delivers a sample container to a measurement device 041.
[FIG. 2B] FIG. 2B is a diagram illustrating a procedure of receiving a sample container 051 for which measurement is completed by the measurement device 041 and delivering the sample container 051 to be measured next.
[FIG. 2C] FIG. 2C is a diagram illustrating a procedure of delivering the sample container 051 to the measurement device 041 and transporting the sample container 051 received from the measurement device 041 to an accommodation unit 002.
[FIG. 2D] FIG. 2D is a diagram illustrating a procedure of receiving the sample container 051 to be finally measured.
[FIG. 3] FIG. 3 is a flowchart illustrating an operation procedure of the analysis device 001.
[FIG. 4A] FIG. 4A is a diagram illustrating a structure used when the first holding part 031 receives the sample container 051 from the accommodation unit 002.
[FIG. 4B] FIG. 4B is a diagram illustrating a structure used when the first holding part 031 delivers the sample container 051 to the measurement device 041.
[FIG. 5A] FIG. 5A is a diagram illustrating a structure used when a second holding part 032 receives the sample container 051 from the measurement device 041.
[FIG. 5B] FIG. 5B is a diagram illustrating a structure used when the second holding part 032 delivers the sample container 051 to the accommodation unit 002.

### Description of Embodiments

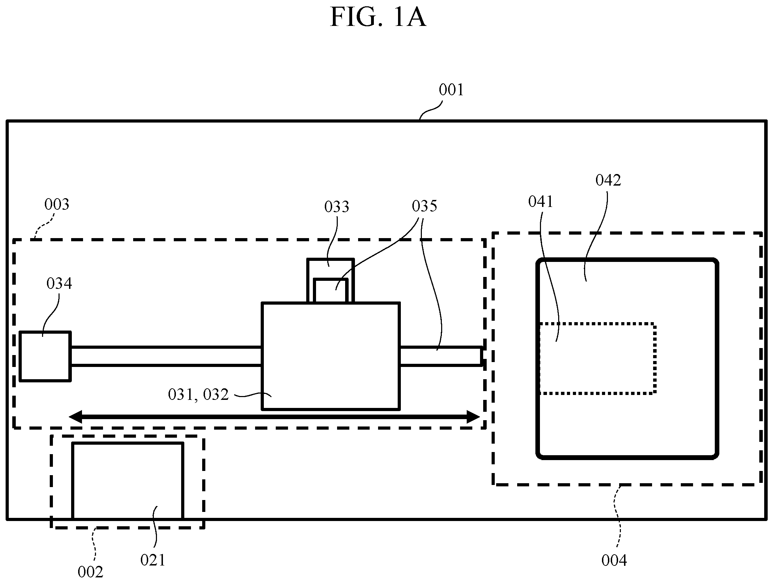

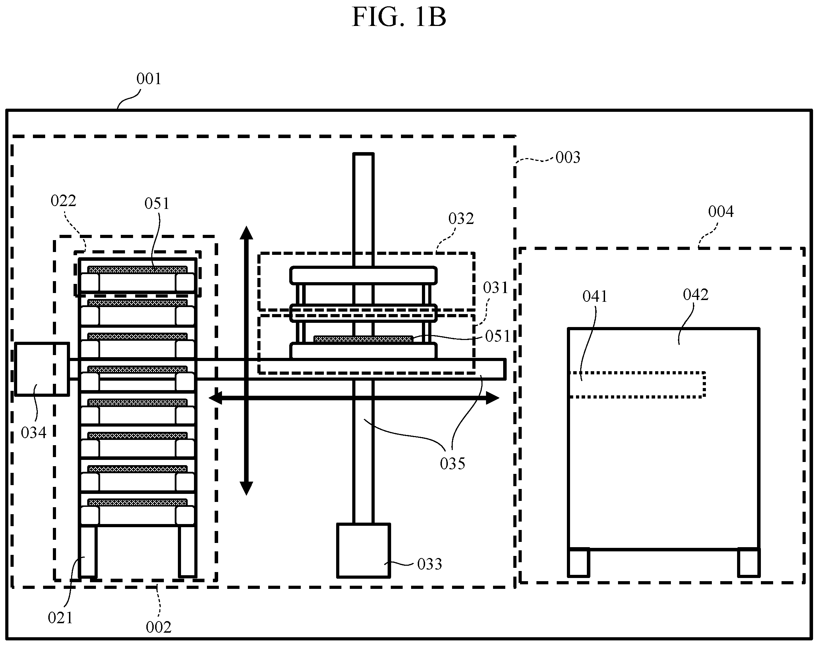

FIG. 1 is a plan view showing an overall configuration of an analysis device 001 according to an embodiment of the invention. The analysis device 001 is a device that measures a sample held in a sample container. The analysis device 001 includes an accommodation unit 002, a transport unit 003, and a measurement unit 004.

The accommodation unit 002 includes an accommodation rack 021 that accommodates sample containers 051 to be described later. The sample container 051 is, for example, a micro-well plate including one or more wells each holding a sample, but is not limited thereto. Examples of the sample include cells, blood, urine, bacteria, tissue pieces, or the like.

The measurement unit 004 includes a measurement device 041 in a measurement unit 042. The measurement device 041 performs a predetermined measurement on the sample accommodated in the sample container 051. Examples of a measurement method include a turbidity measurement, an absorbance measurement, a fluorescence measurement, and a measurement based on image analysis.

The transport unit 003 transports the sample container 051 between the accommodation unit 002 and the measurement unit 004. The transport unit 003 includes a first holding part 031, a second holding part 032, an actuator 033, an actuator 034, and a transport lane 035. The actuator 033 moves the first holding part 031 and the second holding part 032 in a vertical direction along the transport lane 035 extending in the vertical direction. The actuator 034 moves the first holding part 031 and the second holding part 032 in a horizontal direction along the transport lane 035 extending in the horizontal direction.

FIG. 1B is a front view of the analysis device 001. The accommodation rack 021 includes one or more accommodation spaces 022 that accommodate the sample containers 051. FIG. 1B shows an example in which the accommodation spaces 022 are stacked in eight stages in an up-down direction. The second holding part 032 is disposed above the first holding part 031. The first holding part 031 and the second holding part 032 are connected and formed in an integrated manner, and move between the accommodation unit 002 and the measurement unit 004 in an integrated manner. The first holding part 031 and the second holding part 032 deliver the sample container 051 according to a procedure to be described later.

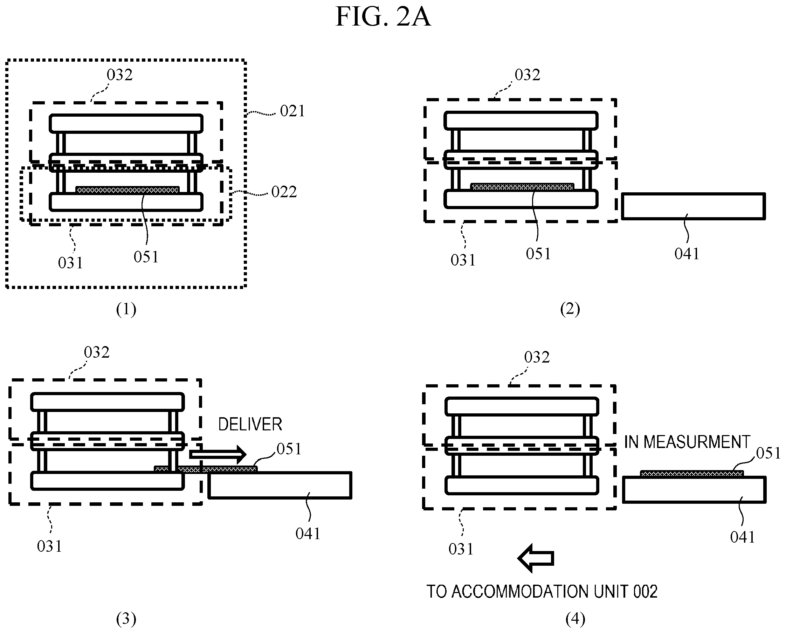

FIG. 2A is a diagram illustrating an operation procedure when the first holding part 031 delivers the sample container to the measurement device 041. The actuator 033 and the actuator 034 move the first holding part 031 and the second holding part 032 to the accommodation space 022, and the first holding part 031 receives the sample container 051 from the accommodation space 022 ((1)). The actuator 033 and the actuator 034 move the first holding part 031 and the second holding part 032 to the measurement device 041 ((2)). The first holding part 031 delivers the sample container 051 to the measurement device 041 ((3)). While the measurement device 041 measures the sample in the sample container 051, the actuator 033 and the actuator 034 move the first holding part 031 and the second holding part 032 toward the accommodation unit 002 ((4)).

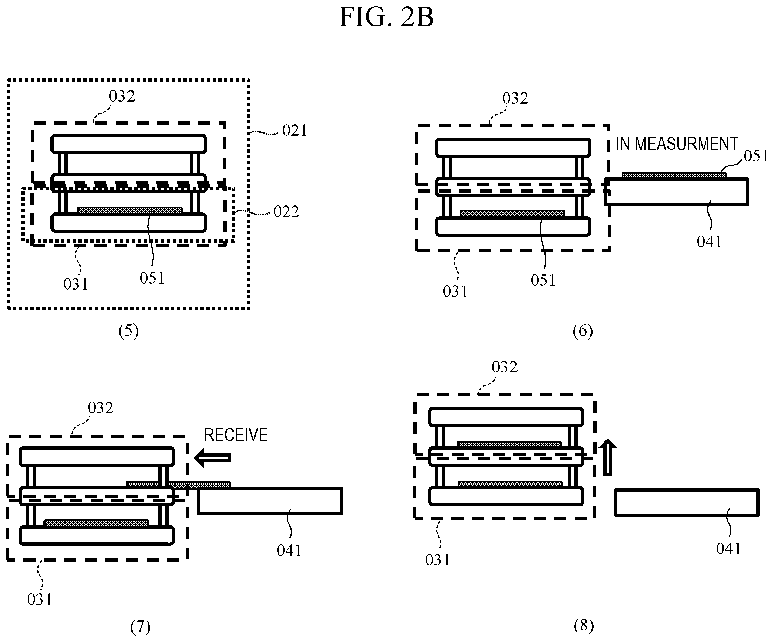

FIG. 2B is a diagram illustrating a procedure of receiving the sample container 051 for which measurement is completed by the measurement device 041 and delivering the sample container 051 to be measured next. The actuator 033 and the actuator 034 move the first holding part 031 to the next accommodation space 022 subsequent to step (4) in FIG. 2A, and the first holding part 031 receives the sample container 051 from the accommodation space 022 ((5)). The actuator 033 and the actuator 034 move the first holding part 031 and the second holding part 032 to the measurement device 041 ((6)). The second holding part 032 receives the sample container 051 for which the measurement is completed by the measurement device 041 from the measurement device 041 ((7)). At this time, if a height of the second holding part 032 and a height of the measurement device 041 are different, the actuator 033 moves the first holding part 031 and the second holding part 032 in the up-down direction such that the heights of both are aligned. The actuator 033 moves the first holding part 031 and the second holding part 032 to a position (upward in FIG. 2B) where the first holding part 031 can deliver the sample container 051 to the measurement device 041 ((8)).

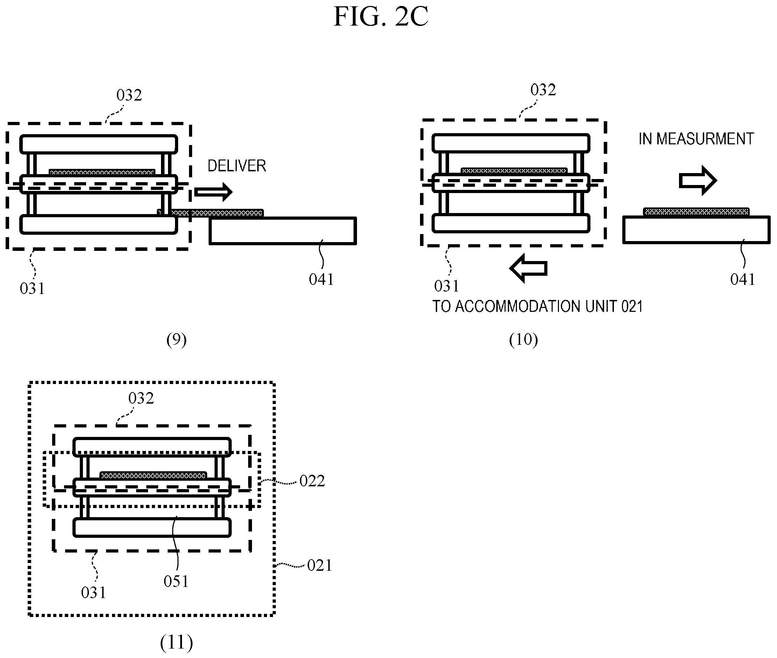

FIG. 2C is a diagram illustrating a procedure of delivering the sample container 051 to the measurement device 041 and transporting the sample container 051 received from the measurement device 041 to the accommodation unit 002. The first holding part 031 delivers the sample container 051 to the measurement device 041 ((9)). The actuator 033 and the actuator 034 move the first holding part 031 and the second holding part 032 (holding the sample container 051 received from the measurement device 041) to the accommodation unit 002 ((10)). The second holding part 032 delivers the sample container 051 to the accommodation space 022 ((11)).

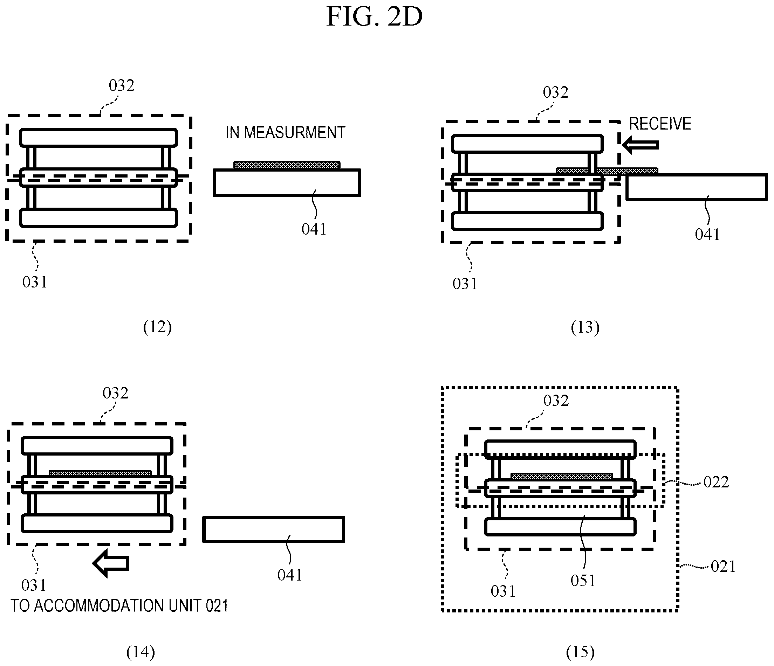

FIG. 2D is a diagram illustrating a procedure of receiving the sample container 051 to be finally measured. After the second holding part 032 delivers the sample container 051 to the accommodation space 022, the actuator 033 and the actuator 034 move the first holding part 031 and the second holding part 032 (both are empty) to the measurement device 041 ((12)). The second holding part 032 receives the sample container 051 for which the measurement is completed from the measurement device 041 ((13)). The actuator 034 moves the first holding part 031 and the second holding part 032 (holding the sample container 051 received from the measurement device 041) to the accommodation unit 002 ((14)). The second holding part 032 delivers the sample container 051 to the accommodation space 022 ((15)).

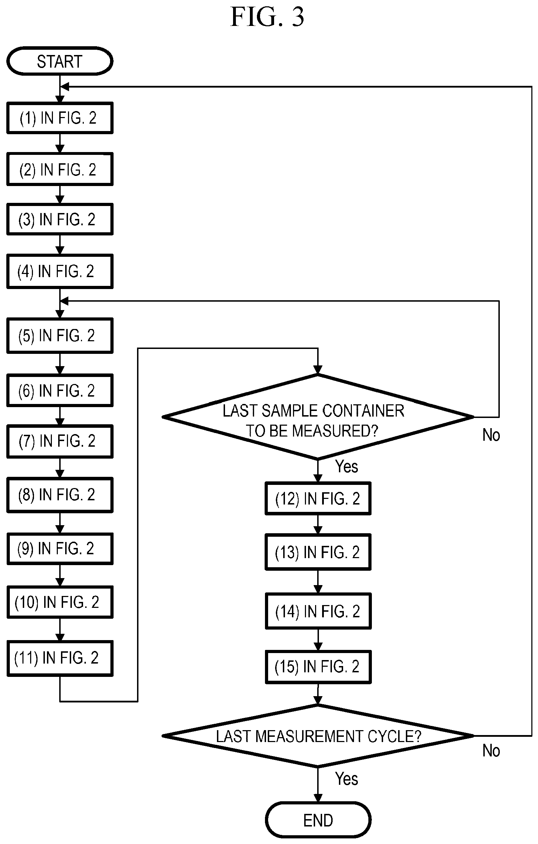

FIG. 3 is a flowchart illustrating an operation procedure of the analysis device 001. The analysis device 001 sequentially executes the procedures from (1) of FIG. 2A to (11) of FIG. 2C. (12) to (15) of FIG. 2D are performed subsequently to (11) of FIG. 2C for the sample container 051 to be finally measured, for other sample containers 0051, the procedure returns to (5) of FIG. 2B after (11) of FIG. 2C, and the same procedure is repeated for the next sample container 0051. The above procedure is repeated for each measurement cycle.

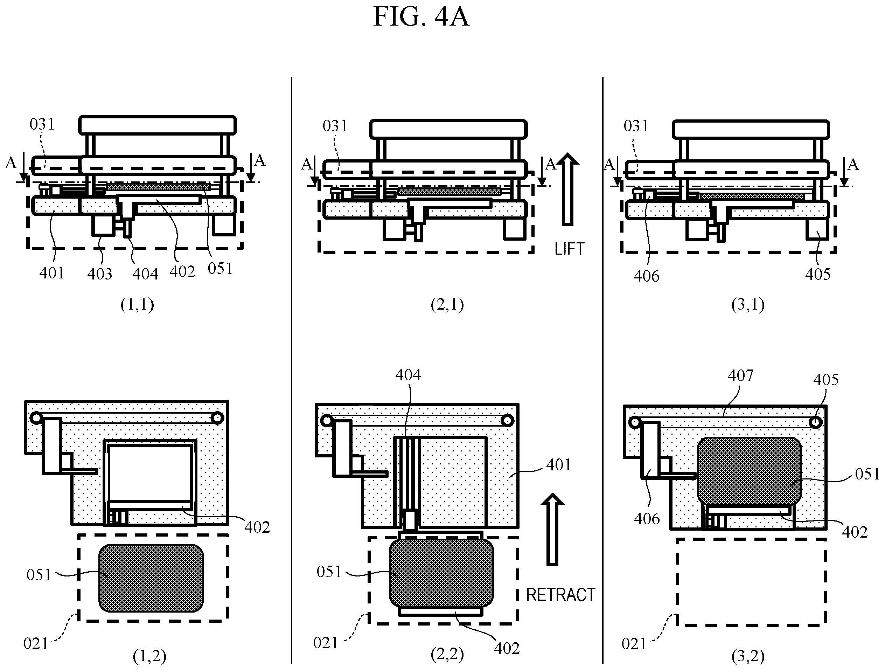

FIG. 4A is a diagram illustrating a structure used when the first holding part 031 receives the sample container 051 from the accommodation unit 002. An upper part of FIG. 4A is a front view. A lower part of FIG. 4A is a plan view in a cross-sectional view taken along a line AA. The first holding part 031 includes a retracting mechanism that retracts the sample container 051 from the accommodation unit 002 to the first holding part 031. The retracting mechanism includes a base 401, a retracting claw 402, an actuator 403, and a belt 404. The actuator 403 pushes out the retracting claw 402 from the first holding part 031 via the belt 404 or retracts the retracting claw 402 to the first holding part 031.

As described in (1) of FIG. 2A, the transport unit 003 moves the first holding part 031 to the accommodation space 022 ((1,1) (1,2)). The actuator 403 inserts the retracting claw 402 below the sample container 051, and moves the sample container 402 to a position where a claw is caught by the sample container 051 (see a positional relationship of (2,2)). The actuator 033 places the sample container 051 on the retracting claw 402 by lifting the first holding part 031 (see (2,1)). The actuator 403 retracts the sample container 051 into the first holding part 031 by retracting the retracting claw 402 into the first holding part 031 ((3,1) (3,2)).

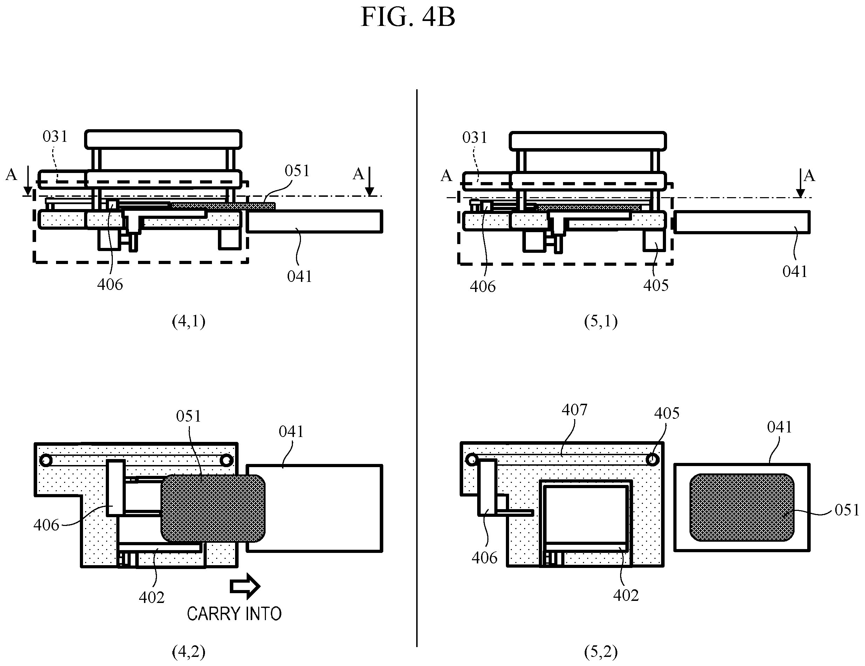

FIG. 4B is a diagram illustrating a structure used when the first holding part 031 delivers the sample container 051 to the measurement device 041. An upper part of FIG. 4B is a front view. A lower part of FIG. 4B is a plan view in the cross-sectional view taken along the line AA. The first holding part 031 further includes a pushing mechanism that pushes the sample container 051 from the first holding part 031 to the measurement device 041. The pushing mechanism includes the base 401, an actuator 405, a belt 407, and a pushing unit 406. The actuator 405 pushes out the pushing unit 406 to the measurement device 041 via the belt 407, or retracts the pushing unit 406 to the first holding part 031.

As described in (2) and (3) of FIG. 2A, the transport unit 003 moves the first holding part 031 to the measurement device 041. The actuator 405 delivers the sample container 051 from the first holding part 031 to the measurement device 041 by pushing out the pushing unit 406 toward the measurement device 041 ((4,1) (4,2)). The actuator 405 delivers the sample container 051 to the measurement device 041 and then pulls the pushing unit 406 back into the first holding part 031 ((5,1) (5,2)).

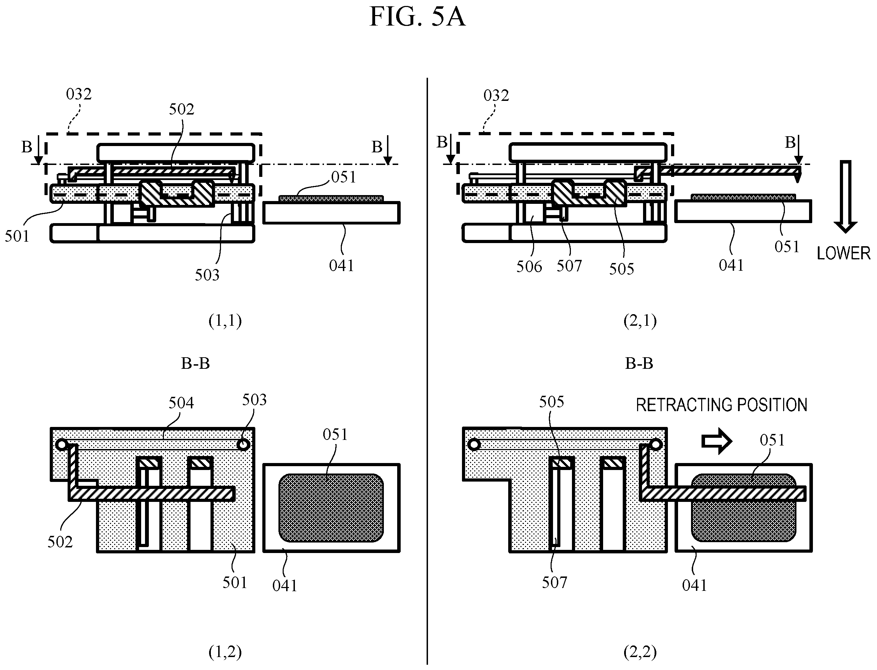

FIG. 5A is a diagram illustrating a structure used when the second holding part 032 receives the sample container 051 from the measurement device 041. An upper part of FIG. 5A is a front view. A lower part of FIG. 5A is a plan view in a cross-sectional view taken along a line BB. The second holding part 032 includes a retracting mechanism that retracts the sample container 051 from the measurement device 041 to the second holding part 032. The retracting mechanism includes a base 501, a retracting claw 502, an actuator 503 and a belt 504. A pushing unit 505, an actuator 506 and a belt 507 will be described later. The actuator 503 pushes out the retracting claw 502 from the second holding part 032 via the belt 504 or retracts the retracting claw 502 to the second holding part 032.

As described in (6) and (7) of FIG. 2B, the transport unit 003 moves the second holding part 032 to the measurement device 041 ((1,1) (1,2)). The actuator 503 pushes out the retracting claw 502 from the second holding part 032, and moves the retracting claw 502 to a position where the claw is caught by the sample container 051 ((2,1) (2,2)). The actuator 033 hooks the retracting claw 502 on the sample container 051 by lowering the second holding part 032 ((2,1)).

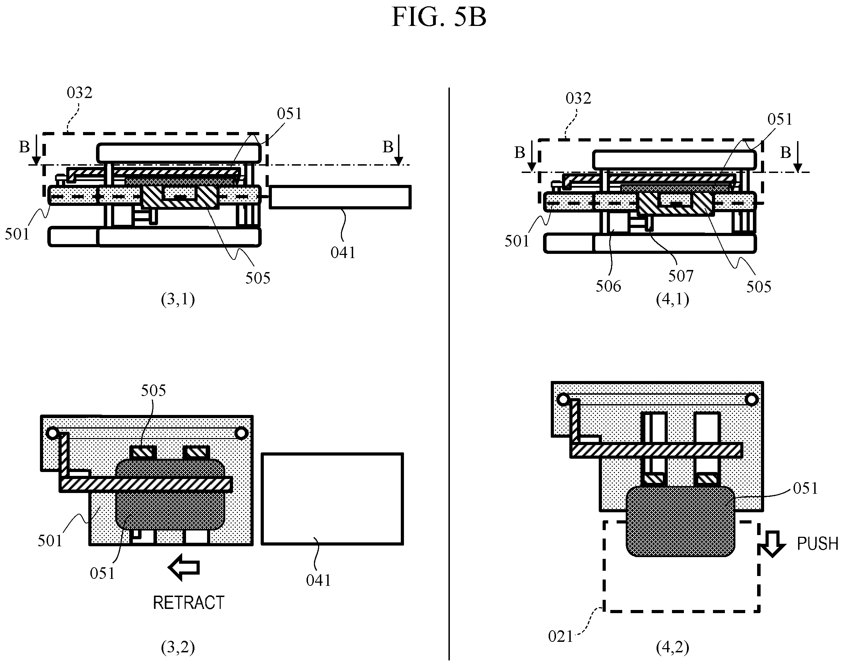

FIG. 5B is a diagram illustrating a structure used when the second holding part 032 delivers the sample container 051 to the accommodation unit 002. An upper part of FIG. 5B is a front view. A lower part of FIG. 5B is a plan view in the cross-sectional view taken along the line BB. The second holding part 032 further includes a pushing mechanism that pushes the sample container 051 from the second holding part 032 to the accommodation unit. The pushing mechanism includes the base 501, the actuator 506, the belt 507, and the pushing unit 505.

The actuator 503 retracts the sample container 051 into the second holding part 032 by retracting the retracting claw 502 into the second holding part 032 after the retracting claw 502 is caught by the sample container 051 ((3,1) (3,2)). The transport unit 003 moves the second holding part 032 to the accommodation unit 002. The actuator 506 delivers the sample container 051 to the accommodation space 022 by pushing out the pushing unit 505 from the second holding part 032 via the belt 507 ((4,1) (4,2)).

### <Overview of Invention>

The analysis device 100 includes the first holding part 031 and the second holding part 032, and the transport unit 003 transports the first holding part 031 and the second holding part 032 in an integrated manner between the accommodation unit 002 and the measurement unit 004. Accordingly, an operation of delivering the sample container 051 to the measurement unit 004 and an operation of receiving the sample container 051 from the measurement unit 004 can be performed together in one reciprocation, so that the throughput of the analysis device 001 is enhanced.

After the second holding part 032 receives the sample container 051 from the measurement device 041 and before the first holding part 031 starts to move toward the accommodation unit 002, the first holding part 031 delivers the sample container 051 to be measured next to the measurement device 041. Accordingly, while the first holding part 031 and the second holding part 032 make the one reciprocation between the accommodation unit 002 and the measurement unit 004, the operation of delivering the sample container 051 to the measurement unit 004 and the operation of receiving the sample container 051 from the measurement unit 004 can be performed together.

The first holding part 031 and the second holding part 032 move between the accommodation unit 002 and the measurement unit 004 by reciprocating on the single transport lane 035. Accordingly, it is not necessary to provide the transport lane for each of a forward path and a return path, so that a size of the analysis device 001 can be reduced.

The first holding part 031 and the second holding part 032 are formed in an integrated manner adjacent to each other in the vertical direction. The transport unit 003 moves the first holding part 031 upward after the second holding part 032 receives the sample container 051 from the measurement device 041, so that the first holding part 031 can deliver the next sample container 051 to the measurement device 041. By placing the first holding part 031 and the second holding part 032 adjacent to each other in the up-down direction in this way, the throughput of the analysis device 001 can be enhanced and a planar size of the analysis device 001 can be controlled.

As shown in FIG. 1A, when the sample container 051 is delivered between the first holding part 031 or the second holding part 032 and the accommodation unit 002, the sample container 051 moves in the up-down direction of FIG. 1A, and when the sample container 051 is delivered between the first holding part 031 or the second holding part 032 and the measurement device 041, the sample container 051 moves in a left-right direction of FIG. 1A. That is, the transport unit 003 and the accommodation unit 002 are placed at positions orthogonal to each other. Accordingly, the planar size of the analysis device 001 can be controlled as compared with a case where the accommodation unit 002/the transport unit 003/the measurement unit 004 are disposed in a straight line. The transport unit 003 and the accommodation unit 002 do not necessarily have to be orthogonal to each other, and as long as the transport unit 003 and the accommodation unit 002 are at least not disposed in the same straight line, the planar size of the analysis device 001 can be controlled to some extent.

### <Modification of Invention>

The invention is not limited to the embodiments described above, and includes various modifications. For example, the embodiment described above has been described in detail for easy understanding of the invention, and the invention is not necessarily limited to those including all the configurations described above.

In the above embodiments, the first holding part 031 is placed below the second holding part 032, but the invention is not limited thereto, and the first holding part 031 and the second holding part 032 may be vertically inverted. In this case, for example, even in the operation of moving the first holding part 031 and the second holding part 032 in the vertical direction as shown in (8) of FIG. 2B, the vertical movement may be reversed from the above description. Further, the first holding part 031 and the second holding part 032 can be disposed in the horizontal direction adjacent to each other and moved in an integrated manner. In this case, for example, in the operation of moving the first holding part 031 and the second holding part 032 in the vertical direction as shown in (8) of FIG. 2B, the first holding part 031 and the second holding part 032 may be moved in the horizontal direction instead of the vertical direction. However, in order to control the planar size of the analysis device 001, it is desirable that the first holding part 031 and the second holding part 032 are adjacent to each other in the up-down direction.

In the above embodiments, the number of the accommodation unit 002 is one, but the invention can also be applied to a configuration including a plurality of accommodation units 002. In this case, after a mechanism for moving the first holding part 031 and the second holding part 032 between the accommodation units 002 is provided, the same operation as in the above embodiments may be performed between each accommodation unit 002 and the measurement unit 004.

In the above embodiments, the retracting claw 402 approaches the sample container 051 from below the sample container 051, but the retracting claw 402 may also approach the sample container 051 from above the sample container 051.

In the above embodiments, the pushing mechanism and the retracting mechanism drive each unit via the belt, respectively, but the pushing mechanism and the retracting mechanism drive may drive each unit by using an appropriate mechanism (for example, a ball screw) instead of the belt.

### Reference Sign List

001: analysis device
002: accommodation unit
003: transport unit
004: measurement unit
021: accommodation rack
022: accommodation space
031: first holding part
032: second holding part
033: actuator
034: actuator
035: transport lane
041: measurement device
042: measurement unit
051: sample container
401: base
402: retracting claw
403: actuator
404: belt
405: actuator
406: pushing unit
407: belt
501: base
502: retracting claw
503: actuator
504: belt
505: pushing unit
506: actuator
507: belt

## Claims

1. An analysis device that measures a sample, comprising:
an accommodation unit (002) that is configured to accommodate a sample container that holds the sample;
a measurement unit (004) that is configured to measure the sample; and
a transport unit (003) that is configured to transport the sample container between the accommodation unit (002) and the measurement unit (004), wherein
the transport unit (003) includes:
a first holding part that is configured to hold the sample container to be delivered to the measurement unit (004); and
a second holding part that is configured to hold the sample container received from the measurement unit (004);
the analysis device is **characterized by** the transport unit including actuators that are configured to move the first holding part and the second holding part in an integrated manner along a transport lane (035) extended in a vertical direction and in a horizontal direction between the accommodation unit (002) and the measurement unit (004),
wherein the actuators comprise a first actuator (033) and a second actuator (034),
wherein the first actuator (033) moves the first holding part and the second holding part in a vertical direction along a transport lane (035) extending in the vertical direction,
wherein the second actuator (034) moves the first holding part and the second holding part in a horizontal direction along a transport lane (35) extending in the horizontal direction,
wherein the first holding part is configured to receive a first sample container from the accommodation unit (002),
the second holding part is configured to receive a second sample container from the measurement unit (004), and
the transport unit (003) is configured to deliver the first sample container held by the first holding part to the measurement unit (004) after the second holding part receives the second sample container from the measurement unit (004) and before the first holding part receives a third sample container from the accommodation unit (002), and
the first holding part and the second holding part are connected and formed in an integrated manner by being joined to each other,
wherein the first holding part (031) and the second holding part (032) are formed in an integrated manner adjacent to each other in the vertical direction,
wherein the second holding part includes a retracting mechanism that is configured to retract the sample container held by the measurement unit (004) to the second holding part,
the retracting mechanism includes a base (501), a retracting claw (502), a second holding part actuator (503) and a belt (504),
the second holding part actuator (503) is configured to push out the retracting claw (502) from the second holding part (302), and move the retracting claw (502) to a position where the claw is caught by the sample container (051),
wherein the first actuator (033) is configured to hook the retracting claw (502) on the sample container (051) by lowering the second holding part (032), and
the second holding part actuator (503) is configured to retract the sample container (051) into the second holding part (032) by retracting the retracting claw (502) into the second holding part (032) after the retracting claw (502) is caught by the sample container (051).

2. The analysis device (001) according to claim 1, wherein
the actuators configured to move the first holding part to a position where the first holding part is able to deliver the first sample container to the measurement unit (004) after the second holding part receives the second sample container from the measurement unit (004) and before the first holding part is moved to a position where the first holding part is able to receive the third sample container from the accommodation unit (002).

3. The analysis device (001) according to claim 1, wherein
the transport unit (003) is configured to include the transport lane that extends from the accommodation unit (002) to the measurement unit (004) and on which the first holding part and the second holding part are placed,
when the first holding part is configured to receive the first sample container from the accommodation unit (002), the transport unit (003) is configured to move the first holding part and the second holding part in an integrated manner to the accommodation unit (002) along the transport lane,
after the first holding part is configured to receive the first sample container, the transport unit (003) is configured to move the first holding part and the second holding part in an integrated manner to the measurement unit (004) along the transport lane, and
after the first sample container held by the first holding part is delivered to the measurement unit (004), the transport unit (003) is configured to move the first holding part and the second holding part in an integrated manner to the accommodation unit (002) along the transport lane.

4. The analysis device (001) according to claim 2, wherein
the second holding part is placed on the first holding part, or the first holding part is placed on the second holding part, and
the actuator is configured to move the first holding part to a position where the first holding part is able to deliver the first sample container to the measurement unit (004) by moving the first holding part and the second holding part in an up-down direction after the second holding part receives the second sample container from the measurement unit (004) and before the first holding part is moved to a position where the first holding part is able to receive the third sample container from the accommodation unit (002).

5. The analysis device (001) according to claim 1, wherein
the first holding part is configured to move the first sample container from the accommodation unit (002) to the first holding part along a first direction when receiving the first sample container from the accommodation unit (002), and
after the first holding part is configured to receive the first sample container, the transport unit (003) is configured to move the first holding part holding the first sample container along a second direction different from the first direction to the measurement unit (004).

6. The analysis device (001) according to claim 1, wherein
the first holding part includes a retracting mechanism that is configured to retract the sample container held by the accommodation unit (002) to the first holding part.

7. The analysis device (001) according to claim 1, wherein
the first holding part includes a pushing mechanism that is configured to push the sample container held by the first holding part to the measurement unit (004).

8. The analysis device (001) according to claim 1, wherein
the second holding part includes a pushing mechanism that is configured to push the sample container held by the second holding part to the accommodation unit (002).

## Patentansprüche

1. Analysevorrichtung, die eine Probe misst und umfasst:
eine Aufnahmeeinheit (002), die konfiguriert ist, einen Probenbehälter aufzunehmen, der die Probe enthält;
eine Messeinheit (004), die konfiguriert ist, die Probe zu messen; und
eine Transporteinheit (003), die konfiguriert ist, den Probenbehälter zwischen der Aufnahmeeinheit (002) und der Messeinheit (004) zu transportieren, wobei
die Transporteinheit (003) enthält:
einen ersten Verwahrungsteil, der konfiguriert ist, den an die Messeinheit (004) zu liefernden Probenbehälter zu enthalten; und
einen zweiten Verwahrungsteil, der konfiguriert ist, den von der Messeinheit (004) empfangenen Probenbehälter zu enthalten;
wobei die Analysevorrichtung **dadurch gekennzeichnet ist, dass** die Transporteinheit Betätigungselemente enthält, die konfiguriert sind, den ersten Verwahrungsteil und den zweiten Verwahrungsteil auf integrierte Weise entlang einer Transportbahn (035), die sich zwischen der Aufnahmeeinheit (002) und der Messeinheit (004) in einer vertikalen Richtung und in einer horizontalen Richtung erstreckt, zu bewegen,
wobei die Betätigungselemente ein erstes Betätigungselement (033) und ein zweites Betätigungselement (034) umfassen,
wobei das erste Betätigungselement (033) den ersten Verwahrungsteil und den zweiten Verwahrungsteil in einer vertikalen Richtung entlang einer Transportbahn (035), die sich in der vertikalen Richtung erstreckt, bewegt,
wobei das zweite Betätigungselement (034) den ersten Verwahrungsteil und den zweiten Verwahrungsteil in einer horizontalen Richtung entlang einer Transportbahn (35), die sich in der horizontalen Richtung erstreckt, bewegt,
wobei der erste Verwahrungsteil konfiguriert ist, einen ersten Probenbehälter von der Aufnahmeeinheit (002) zu empfangen,
der zweite Verwahrungsteil konfiguriert ist, einen zweiten Probenbehälter von der Messeinheit (004) zu empfangen, und
die Transporteinheit (003) konfiguriert ist, den ersten durch den ersten Verwahrungsteil verwahrten Probenbehälter an die Messeinheit (004) zu liefern, nachdem der zweite Verwahrungsteil den zweiten Probenbehälter von der Messeinheit (004) empfangen hat und bevor der erste Verwahrungsteil einen dritten Probenbehälter von der Aufnahmeeinheit (002) empfängt, und
der erste Verwahrungsteil und der zweite Verwahrungsteil verbunden sind und auf integrierte Weise gebildet sind, indem sie miteinander verbunden sind,
wobei der erste Verwahrungsteil (031) und der zweite Verwahrungsteil (032) auf integrierte Weise angrenzend aneinander in der vertikalen Richtung gebildet sind,
wobei der zweite Verwahrungsteil einen Rückziehmechanismus enthält, der konfiguriert ist, den durch die Messeinheit (004) verwahrten Probenbehälter zu dem zweiten Verwahrungsteil zurückzuziehen,
wobei der Rückziehmechanismus eine Basis (501), einen Rückziehgreifer (502), ein zweites Verwahrungsteil-Betätigungselement (503) und ein Band (504) enthält,
wobei das zweite Verwahrungsteil-Betätigungselement (503) konfiguriert ist, den Rückziehgreifer (502) von dem zweiten Verwahrungsteil (302) herauszuschieben und den Rückziehgreifer (502) zu einer Position zu bewegen, an der der Greifer durch den Probenbehälter (051) gefangen wird,
wobei das erste Betätigungselement (033) konfiguriert ist, den Rückziehgreifer (502) durch Absenken des zweiten Verwahrungsteils (032) auf dem Probenbehälter (051) einzuhaken, und
das zweite Verwahrungsteil-Betätigungselement (503) konfiguriert ist, den Probenbehälter (051) in den zweiten Verwahrungsteil (032) durch Zurückziehen des Rückziehgreifers (502) in den zweiten Verwahrungsteil (032) zurückzuziehen, nachdem der Rückziehgreifer (502) durch den Probenbehälter (051) gefangen wird.

2. Analysevorrichtung (001) nach Anspruch 1, wobei
die Betätigungselemente konfiguriert sind, den ersten Verwahrungsteil zu einer Position zu bewegen, wo der erste Verwahrungsteil den ersten Probenbehälter an die Messeinheit (004) liefern kann, nachdem der zweite Verwahrungsteil den zweiten Probenbehälter von der Messeinheit (004) empfängt und bevor der erste Verwahrungsteil zu einer Position bewegt wird, wo der erste Verwahrungsteil den dritten Probenbehälter von der Aufnahmeeinheit (002) empfangen kann.

3. Analysevorrichtung (001) nach Anspruch 1, wobei
die Transporteinheit (003) konfiguriert ist, die Transportbahn, die sich von der Aufnahmeeinheit (002) zu der Messeinheit (004) erstreckt und auf der der erste Verwahrungsteil und der zweite Verwahrungsteil positioniert sind, zu enthalten,
dann, wenn der erste Verwahrungsteil konfiguriert ist, den ersten Probenbehälter von der Aufnahmeeinheit (002) zu empfangen, die Transporteinheit (003) konfiguriert ist, den ersten Verwahrungsteil und den zweiten Verwahrungsteil auf integrierte Weise entlang der Transportbahn zu der Aufnahmeeinheit (002) zu bewegen,
nachdem der erste Verwahrungsteil konfiguriert worden ist, den ersten Probenbehälter zu empfangen, die Transporteinheit (003) konfiguriert ist, den ersten Verwahrungsteil und den zweiten Verwahrungsteil auf integrierte Weise entlang der Transportbahn zu der Messeinheit (004) zu bewegen, und
nachdem der ersten Probenbehälter, der durch den ersten Verwahrungsteil verwahrt wird, an die Messeinheit (004) geliefert worden ist, die Transporteinheit (003) konfiguriert ist, den ersten Verwahrungsteil und den zweiten Verwahrungsteil auf integrierte Weise entlang der Transportbahn zu der Aufnahmeeinheit (002) zu bewegen.

4. Analysevorrichtung (001) nach Anspruch 2, wobei
der zweite Verwahrungsteil auf dem ersten Verwahrungsteil positioniert ist oder der erste Verwahrungsteil auf dem zweiten Verwahrungsteil positioniert ist und
das Betätigungselement konfiguriert ist, den ersten Verwahrungsteil zu einer Position zu bewegen, wo der erste Verwahrungsteil den ersten Probenbehälter durch Bewegen des ersten Verwahrungsteils und des zweiten Verwahrungsteils in eine Aufwärts-Abwärts-Richtung an die Messeinheit (004) liefern kann, nachdem der zweite Verwahrungsteil den zweiten Probenbehälter von der Messeinheit (004) empfangen hat und bevor der erste Verwahrungsteil zu einer Position bewegt wird, an der der erste Verwahrungsteil den dritten Probenbehälter von der Aufnahmeeinheit (002) empfangen kann.

5. Analysevorrichtung (001) nach Anspruch 1, wobei
der erste Verwahrungsteil konfiguriert ist, den ersten Probenbehälter von der Aufnahmeeinheit (002) entlang einer ersten Richtung zu dem ersten Verwahrungsteil zu bewegen, wenn der erste Probenbehälter von der Aufnahmeeinheit (002) empfangen wird, und
nachdem der erste Verwahrungsteil konfiguriert worden ist, den ersten Probenbehälter zu empfangen, die Transporteinheit (003) konfiguriert ist, den ersten Verwahrungsteil, der den ersten Probenbehälter verwahrt, entlang einer zweiten Richtung, die von der ersten Richtung verschieden ist, zu der Messeinheit (004) zu bewegen.

6. Analysevorrichtung (001) nach Anspruch 1, wobei
der erste Verwahrungsteil einen Rückziehmechanismus enthält, der konfiguriert ist, den durch die Aufnahmeeinheit (002) verwahrten Probenbehälter zu dem ersten Verwahrungsteil zurückzuziehen.

7. Analysevorrichtung (001) nach Anspruch 1, wobei
der erste Verwahrungsteil einen Schiebemechanismus enthält, der konfiguriert ist, den durch den ersten Verwahrungsteil verwahrten Probenbehälter zu der Messeinheit (004) zu schieben.

8. Analysevorrichtung (001) nach Anspruch 1, wobei
der zweite Verwahrungsteil einen Schiebemechanismus enthält, der konfiguriert ist, den durch den zweiten Verwahrungsteil verwahrten Probenbehälter zu der Aufnahmeeinheit (002) zu schieben.

## Revendications

1. Dispositif d'analyse qui mesure un échantillon, comprenant :
une unité de réception (002) qui est configurée pour recevoir un récipient d'échantillon qui maintient l'échantillon ;
une unité de mesurage (004) qui est configurée pour mesurer l'échantillon ; et
une unité de transport (003) qui est configurée pour transporter le récipient d'échantillon entre l'unité de réception (002) et l'unité de mesurage (004),
dans lequel
l'unité de transport (003) inclut :
une première partie de maintien qui est configurée pour maintenir le récipient d'échantillon devant être distribué à l'unité de mesurage (004) ; et
une deuxième partie de maintien qui est configurée pour maintenir le récipient d'échantillon reçu depuis l'unité de mesurage (004) ;
le dispositif d'analyse étant **caractérisé en ce que** l'unité de transport inclut des actionneurs qui sont configurés pour déplacer la première partie de maintien et la deuxième partie de maintien d'une manière intégrée le long d'une voie de transport (035) qui s'étend dans une direction verticale et dans une direction horizontale entre l'unité de réception (002) et l'unité de mesurage (004),
dans lequel les actionneurs comprennent un premier actionneur (033) et un deuxième actionneur (034),
dans lequel le premier actionneur (033) déplace la première partie de maintien et la deuxième partie de maintien dans une direction verticale le long d'une voie de transport (035) qui s'étend dans la direction verticale,
dans lequel le deuxième actionneur (034) déplace la première partie de maintien et la deuxième partie de maintien dans une direction horizontale le long d'une voie de transport (35) qui s'étend dans la direction horizontale,
dans lequel la première partie de maintien est configurée pour recevoir un premier récipient d'échantillon depuis l'unité de réception (002),
la deuxième partie de maintien est configurée pour recevoir un deuxième récipient d'échantillon depuis l'unité de mesurage (004), et
l'unité de transport (003) est configurée pour distribuer le premier récipient d'échantillon maintenu par la première partie de maintien à l'unité de mesurage (004) après réception, par la deuxième partie de maintien, du deuxième récipient d'échantillon depuis l'unité de mesurage (004) et avant réception, par la première partie de maintien, d'un troisième récipient d'échantillon depuis l'unité de réception (002), et
la première partie de maintien et la deuxième partie de maintien sont connectées et formées d'une manière intégrée en étant jointes l'une à l'autre,
dans lequel la première partie de maintien (031) et la deuxième partie de maintien (032) sont formées d'une manière intégrée et sont adjacentes l'une à l'autre dans la direction verticale,
dans lequel la deuxième partie de maintien inclut un mécanisme de rétraction qui est configuré pour rétracter le récipient d'échantillon maintenu par l'unité de mesurage (004) jusqu'à la deuxième partie de maintien,
le mécanisme de rétraction inclut une base (51), une griffe de rétraction (502), un actionneur de deuxième partie de maintien (503) et une courroie (504),
l'actionneur de deuxième partie de maintien (503) est configuré pour pousser la griffe de rétraction (502) hors de la deuxième partie de maintien (302), et pour déplacer la griffe de rétraction (502) jusqu'à une position où la griffe est capturée par le récipient d'échantillon (051),
dans lequel le premier actionneur (033) est configuré pour accrocher la griffe de rétraction (502) sur le récipient d'échantillon (051) en abaissant la deuxième partie de maintien (032), et
l'actionneur de deuxième partie de maintien (503) est configuré pour ramener le récipient d'échantillon (051) jusque dans la deuxième partie de maintien (032) en ramenant la griffe de rétraction (502) jusque dans la deuxième partie de maintien (032) après saisie de la griffe de rétraction (502) par le récipient d'échantillon (051).

2. Dispositif d'analyse (001) selon la revendication 1, dans lequel
les actionneurs sont configurés pour déplacer la première partie de maintien jusqu'à une position où la première partie de maintien est capable de distribuer le premier récipient d'échantillon à l'unité de mesurage (004) après que réception, par la deuxième partie de maintien, du deuxième récipient d'échantillon depuis l'unité de mesurage (004) et avant déplacement de la première partie de maintien à une position où la première partie de maintien est capable de recevoir le troisième récipient d'échantillon depuis l'unité de réception (002).

3. Dispositif d'analyse (001) selon la revendication 1, dans lequel
l'unité de transport (003) est configurée pour inclure la voie de transport qui s'étend depuis l'unité de réception (002) jusqu'à l'unité de mesurage (004) et sur laquelle sont placées la première partie de maintien et la deuxième partie de maintien,
quand la première partie de maintien est configurée pour recevoir le premier récipient d'échantillon depuis l'unité de réception (002), l'unité de transport (003) est configurée pour déplacer la première partie de maintien et la deuxième partie de maintien d'une manière intégrée jusqu'à l'unité de réception (002) le long de la voie de transport,
après configuration de la première partie de maintien pour recevoir le premier récipient d'échantillon, l'unité de transport (003) est configurée pour déplacer la première partie de maintien et la deuxième partie de maintien d'une manière intégrée jusqu'à l'unité de mesurage (004) le long de la voie de transport, et
après distribution du premier récipient d'échantillon maintenu par la première partie de maintien à l'unité de mesurage (004), l'unité de transport (003) est configurée pour déplacer la première partie de maintien et la deuxième partie de maintien d'une manière intégrée jusqu'à l'unité de réception (002) le long de la voie de transport.

4. Dispositif d'analyse (001) selon la revendication 2, dans lequel
la deuxième partie de maintien est placée sur la première partie de maintien, ou la première partie de maintien est placée sur la deuxième partie de maintien, et
l'actionneur est configuré pour déplacer la première partie de maintien jusqu'à une position où la première partie de maintien est capable de distribuer le premier récipient d'échantillon à l'unité de mesurage (004) en déplaçant la première partie de maintien et la deuxième partie de maintien dans une direction haut/bas après réception, par la deuxième partie de maintien, du deuxième récipient d'échantillon depuis l'unité de mesurage(004) et avant déplacement de la première partie de maintien jusqu'à une position où la première partie de maintien est capable de recevoir le troisième récipient d'échantillon depuis l'unité de réception (002).

5. Dispositif d'analyse (001) selon la revendication 1, dans lequel
la première partie de maintien est configurée pour déplacer le premier récipient d'échantillon depuis l'unité de réception (002) jusqu'à la première partie de maintien le long d'une première direction lors de la réception du premier récipient d'échantillon depuis l'unité de réception (002), et
après configuration de la première partie de maintien pour recevoir le premier récipient d'échantillon, l'unité de transport (003) est configurée pour déplacer la première partie de maintien maintenant le premier récipient d'échantillon selon une deuxième direction différente de la première direction jusqu'à l'unité de mesurage (004).

6. Dispositif d'analyse (001) selon la revendication 1, dans lequel
la première partie de maintien inclut un mécanisme de rétraction qui est configuré pour ramener le récipient d'échantillon maintenu par l'unité de réception (002) jusqu'à la première partie de maintien.

7. Dispositif d'analyse (001) selon la revendication 1, dans lequel
la première partie de maintien inclut un mécanisme de poussée qui est configuré pour pousser le récipient d'échantillon maintenu par la première partie de maintien jusqu'à l'unité de mesurage.

8. Dispositif d'analyse (001) selon la revendication 1, dans lequel
la deuxième partie de maintien inclut un mécanisme de poussée qui est configuré pour pousser le récipient d'échantillon maintenu par la deuxième partie de maintien jusqu'à l'unité de réception (002).
